# EUROPÄISCHE PATENTSCHRIFT

(11) **EP 2 599 096 B1**
(45) Veröffentlichungstag und Bekanntmachung des Hinweises auf die Patenterteilung: **13.08.2014**
(21) Anmeldenummer: 11726345.9
(22) Anmeldetag: 14.06.2011
(51) Int. Cl.: H01G 9/00, H01G 11/10, H01G 11/18, H01G 11/78, H01M 2/10, H01M 10/613, H01M 10/643, H01M 10/6557, H01M 10/6563, H01G 2/08, H01C 1/08, H01C 13/00

(54) **ANORDNUNG ZUM KÜHLEN VON WÄRME ERZEUGENDEN ELEKTRISCHEN BAUELEMENTEN, KONDENSATORBAUGRUPPE UND HERSTELLVERFAHREN FÜR EINE ANORDNUNG**
ARRANGEMENT FOR COOLING ELECTRICAL COMPONENTS THAT GENERATE HEAT, CAPACITOR ASSEMBLY, AND METHOD FOR PRODUCING AN ARRANGEMENT
AGENCEMENT DESTINÉ À REFROIDIR DES COMPOSANTS ÉLECTRIQUES PRODUISANT DE LA CHALEUR, GROUPE DE CONDENSATEURS ET PROCÉDÉ DE FABRICATION D'UN AGENCEMENT

(30) Priorität: 30.07.2010 DE 102010032936
(43) Veröffentlichungstag der Anmeldung: 05.06.2013
(73) Patentinhaber: Sew-Eurodrive GmbH & Co. KG, 76646 Bruchsal (DE)
(72) Erfinder: SCHIFFMANN, Sebastian, 76709 Kronau (DE); LEWANDOWSKI, Marek, 71272 Renningen (DE); HAUCK, Matthias, 68723 Schwetzingen (DE); SCHMIDT, Josef, 76676 Graben-Neudorf (DE)
(86) Internationale Anmeldenummer: PCT/EP2011/002902
(87) Internationale Veröffentlichungsnummer: WO 2012/013265

(56) Entgegenhaltungen:
- EP-A2- 0 514 840
- DE-A1-102004 045 182
- DE-A1-102005 026 703
- JP-A- 2006 253 544

## Beschreibung

Die Erfindung betrifft eine Anordnung zum Kühlen von Wärme erzeugenden elektrischen Bauelementen, Kondensatorbaugruppe und Herstellverfahren für eine Anordnung.

Aus der EP 1 178 558 A2 ist eine ebene regelmäßige Anordnung von Power-Modulen gezeigt, bei der ein von einem Lüfter, also aktiv, angetriebener Luftstrom an der Wandung der Power-Module entlang geführt wird, wobei der Luftstrom begrenzt wird durch die Wandungen von Ausnehmungen, in welchen jeweils ein Power-Modul angeordnet ist. Dabei ist der Luftstrom im Wesentlichen in der Ebene der regelmäßigen Anordnung geführt.

Aus der DE 10 2004 045 182 B4 ist ein Kondensatormodul bekannt, bei der Luft eines Wärme erzeugende Bauelemente umgebenden Raumbereichs mittels eines Lüfters vermischt wird.

Aus US 6 714 391 B2 ist eine Kühlanordnung für eine Kondensatorbaugruppe bekannt.

Auch aus der DE 10 2004 035 810 A1 ist ein Kondensatormodul bekannt.

Aus der US 2006/0 050 468 A1 ist ein Kondensatormodul mit auf einer Leiterplatte bestückten Kondensatoren bekannt.

Aus der US 2003/0 133 251 A1 ist ein vergleichbares Modul bekannt.

Aus der US 4 670 814 A ist ein Kondensatormodul mit einem Aufnahmeteil bekannt, das Ausnehmungen aufweist, bei dem jeweils ein Kondensator von einer der Ausnehmungen des Aufnahmeteils aufgenommen ist.

Aus der DE 10 2005 026 703 A1 ist eine Anordnung zum Kühlen von elektrischen Bauelementen bekannt, die mittels Stromschienen elektrisch verbunden sind.

Der Erfindung liegt daher die Aufgabe zugrunde, eine Anordnung mit wärmeerzeugenden Bauelementen leistungsfähig weiterzubilden.

Erfindungsgemäß wird die Aufgabe bei der Anordnung zum Kühlen von Wärme erzeugenden elektrischen Bauelementen nach Anspruch 1, bei der Kondensatorbaugruppe nach den in Anspruch 16 und bei dem Herstellverfahren für eine Anordnung nach den in Anspruch 17 angegebenen Merkmalen gelöst.

Wichtige Merkmale der Erfindung bei der Anordnung zum Kühlen von Wärme erzeugenden elektrischen Bauelementen, insbesondere Kondensatoren, sind, dass
ein Aufnahmeteil Ausnehmungen aufweist, in welche die Bauelemente aufnehmbar sind,
wobei die Bauelemente auf einer Leiterplatte bestückt sind,
wobei Luftkanäle im Aufnahmeteil angeordnet sind, die vom von der Leiterplatte abgewandten Seite des Aufnahmeteils auf die vom Aufnahmeteil abgewandte Seite der Leiterplatte führen.

Von Vorteil ist dabei, dass eine möglichst homogene Wärmeverteilung erreichbar ist und die Wärme direkt abführbar ist von den Wärmequellen.

Bei einer vorteilhaften Ausgestaltung ist das Aufnahmeteil aus zumindest zwei Aufnahmeteilstücken zusammengesetzt,
insbesondere wobei die Aufnahmeteilstücke dicht verbunden sind, insbesondere luftdicht und/oder wasserdicht. Von Vorteil ist dabei, dass ein Kapselgehäuse für die Kondensatoren aus zwei gleichen Stücken bildbar ist. Somit muss nur eine Teiletyp vorrätig gehalten werden, weshalb die Teilezahl im Lager der Fertigungsanlage gering gehalten ist. Außerdem ist somit der die Kondensatoren umgebende Innenraum vom Raum des Kühlmediums abgedichtet.

Bei einer vorteilhaften Ausgestaltung ist das Aufnahmeteil die Verbindungsvorrichtung, insbesondere Leiterplatte oder Stromschiene, samt der auf ihr bestückten Kondensatoren gehäusebildend und abgedichtet gegen die das Kühlmedium führenden Kanäle umschließt. Von Vorteil ist dabei, dass statt der Leiterplatte mit Kondensatoren auch mittels Stromschienen verbundene Kondensatoren verwendbar sind. Die Entwärmung der Anordnung ist mittels der Kanäle effektiv gestaltbar.

Erfindungsgemäß weist die Leiterplatte Ausnehmungen auf zur Durchleitung der Luftkanäle. Von Vorteil ist dabei, dass mittels der Luftkanäle der Kühlluftstrom durch die Leiterplattenebene hindurchführbar ist und somit die Kühlluft von einer Seite auf die andere Seite der Leiterplatte transportierbar ist, wobei auf der erstgenannten Seite hierbei das Aufnahmeteil angeordnet ist und nur dessen röhrenartige Fortsätze durch die Ausnehmungen der Leiterplatte hindurchragen. Auf diese Weise ist an der anderen Seite eine Verschlussplatte vorsehbar, so dass die Bauelemente samt Leiterplatte luftdicht von der Umgebung abschließbar vorsehbar sind.

Bei einer vorteilhaften Ausgestaltung sind die Luftkanäle jeweils in röhrenartigen Ausnehmungen des Aufnahmeteils angeordnet. Von Vorteil ist dabei, dass eine einfache Herstellung der Luftkanäle, beispielsweise als zylindrische langgestreckte Löcher im Aufnahmeteil realisierbar ist.

Bei einer vorteilhaften Ausgestaltung ist die Oberfläche im Bereich der im Aufnahmeteil angeordneten Ausnehmungen rau ausgeführt. Von Vorteil ist dabei, dass eine verbesserte Kontaktierung zum Bauelement hin ermöglicht ist. Hierzu werden die Erhebungen der aufgerauten Oberfläche beim Verbinden des Bauelements mit dem Aufnahmeteil verformt, insbesondere elastisch verformt, und somit ein verringerter Wärmeübergangswiderstand erreicht.

Bei einer vorteilhaften Ausgestaltung weist die Oberfläche im Bereich der im Aufnahmeteil angeordneten Ausnehmungen Noppen und/oder Rillen auf. Von Vorteil ist dabei, dass die Rauheit in einfacher Weise herstellbar ist.

Bei einer vorteilhaften Ausgestaltung ist das Aufnahmeteil mit einer Verschlussplatte derart dicht verbindbar, dass die Leiterplatte zusammen mit den Bauelementen von der Umgebung in hoher Schutzart, insbesondere wasserdicht und/oder luftdicht abgeschlossen ist. Von Vorteil ist dabei, dass Ausgasungen der Bauelemente im abgeschlossenen Raumbereich verbleiben.

Bei einer vorteilhaften Ausgestaltung sind die Luftkanäle jeweils in den zwischen den Ausnehmungen des Aufnahmeteils gebildeten Raumbereichen des Aufnahmeteils angeordnet. Von Vorteil ist dabei, dass eine möglichst homogene Temperaturverteilung erreichbar ist.

Bei einer vorteilhaften Ausgestaltung erstrecken sich die Ausnehmungen im Aufnahmeteil in Normalenrichtung zur Leiterplattenebene und/oder sind zumindest teilweise zylindrisch geformt. Von Vorteil ist dabei, dass entsprechend geformte Bauelemente einfach aufnehmbar sind.

Bei einer vorteilhaften Ausgestaltung sind die Luftkanäle jeweils in Normalenrichtung zur Leiterplattenebene angeordnet. Von Vorteil ist dabei, dass ein Verbinden der Bauelemente in dieser Richtung ermöglicht ist. Insbesondere ist somit das Aufnahmeteil als Fertigungshilfe verwendbar. Dabei werden die Bauelemente in die Ausnehmungen des Aufnahmeteils eingeschoben und danach die Anschlussfüsschen mit der Leiterplatte verbunden, insbesondere lötverbunden.

Bei einer vorteilhaften Ausgestaltung bilden die Ausnehmungen der Leiterplatte und/oder die Luftkanäle im Aufnahmeteil ein endliches zweidimensionales Gitter, insbesondere in einer zur Leiterplattenebene parallelen Ebene. Von Vorteil ist dabei, dass eine möglichst dichte und kompakte Anordnung bei möglichst homogener Temperaturverteilung ermöglicht ist, insbesondere sogar bei Reihenschaltung der Bauelemente.

Bei einer vorteilhaften Ausgestaltung sind das Aufnahmeteil samt Verschlussplatte in einem Gehäuse angeordnet, so dass die Luftkanäle mit einem konvektiv oder durch einen Lüfter angetriebenen Kühlluftstrom durchströmbar sind. Von Vorteil ist dabei, dass der luftdicht abgeschlossene Bereich gut entwärmbar ist.

Bei einer vorteilhaften Ausgestaltung sind die Bauelemente mittels Presspassung mit dem Aufnahmeteil verbunden
und/oder
zwischen der Wandung des Aufnahmeteils und dem jeweiligen Bauelement ist ein Öl, Wärmeleitpaste, Vergussmasse oder eine Flüssigkeit angeordnet. Von Vorteil ist dabei, dass ein verbesserter Wärmeübergang ermöglicht ist.

Bei einer vorteilhaften Ausgestaltung ist das Aufnahmeteil aus Kunststoff und/oder das Aufnahmeteil ist aus derart elastischem Material, dass das Aufnahmeteil zumindest teilweise elastisch verformt ist beim Einfügen des jeweiligen Bauelements in die jeweils zugeordnete Ausnehmung des Aufnahmeteils. Von Vorteil ist dabei, dass ein verbesserter Wärmeübergang durch eine möglichst große Kontaktfläche erreicht ist.

Wichtige Merkmale bei der Kondensatorbaugruppe mit einer obengenannten Anordnung sind, dass die Bauelemente ein zylindrisches Gehäuse aufweisen und mit ihren Anschlussfüsschen auf der Leiterplatte lötverbunden sind. Von Vorteil ist dabei, dass eine einfache und kostengünstige Verbindungstechnik einsetzbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Aufnahmeteil 1 gezeigt.
In der Figur 2 ist eine Baugruppe mit Kühlanordnung in B-B Schnittansicht gezeigt.
In der Figur 3 ist eine zugehörige Draufsicht gezeigt, bei welcher die Schnittlinien A-A und B-B gezeigt sind.

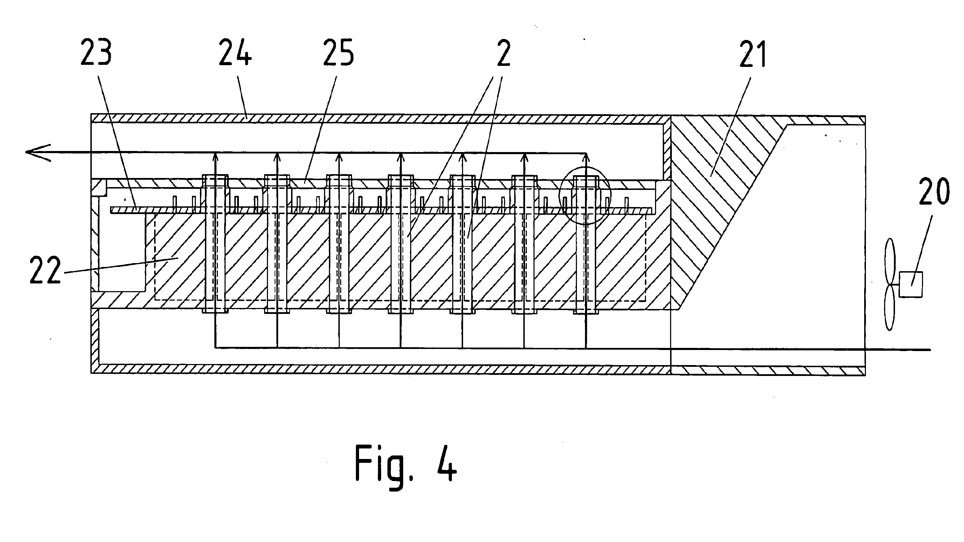

In der Figur 4 ist der zugehörige A-A Schnitt gezeigt.

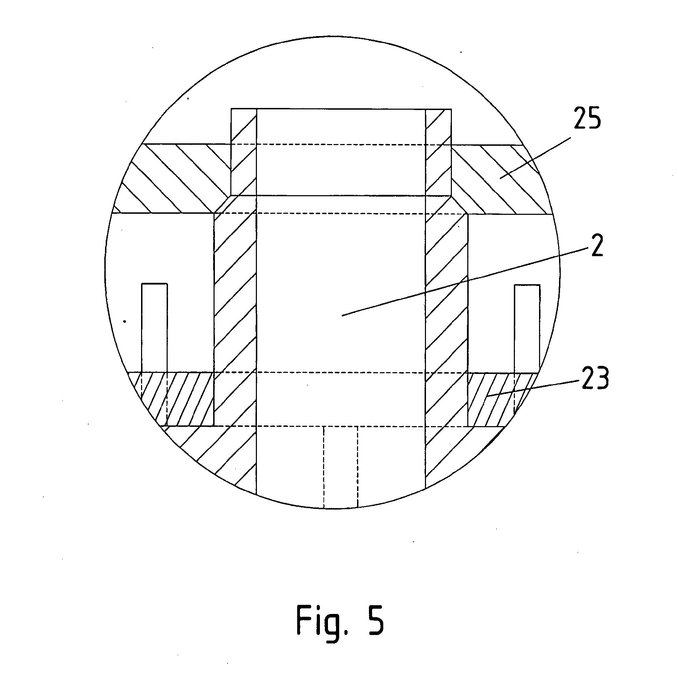

In der Figur 5 ist ein vergrößerter Ausschnitt der Figur 4 gezeigt.
In der Figur 6 ist ein Aufnahmeteil 50 gezeigt, das als mit einem gleichartigen Aufnahmeteil 50 zusammensetzbar ist.

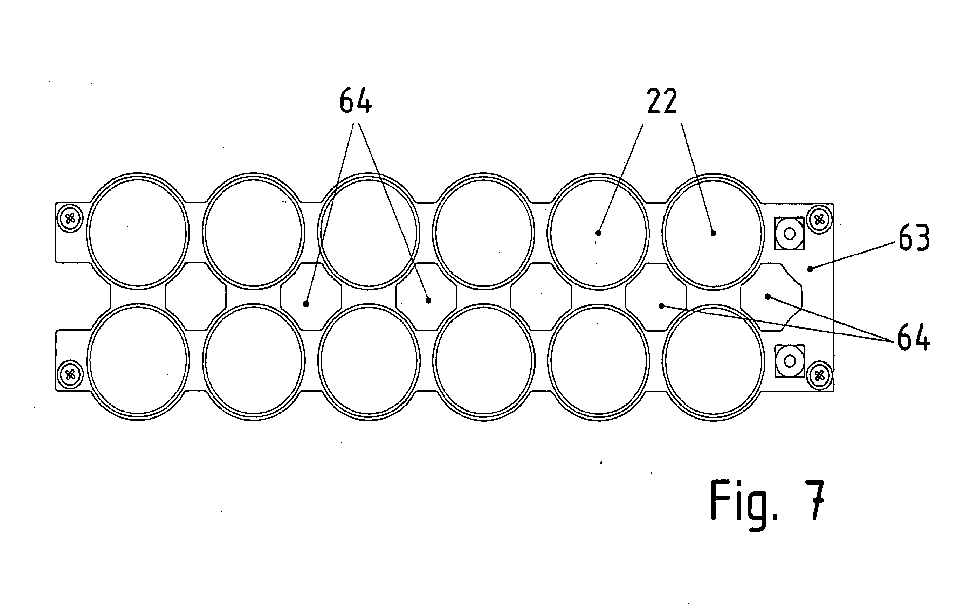

In der Figur 7 ist eine Leiterplatte 63 gezeigt, welche mit Kondensatoren 22 bestückt ist und Ausnehmungen 64 zur Aufnahme und Durchführung der Dome 51 aufweist.
In der Figur 8 ist das mit Leiterplatte 63 befüllte Aufnahmeteil 50 gezeigt.
In der Figur 11 ist eine Draufsicht auf eine erfindungsgemäße Anordnung gezeigt, wobei die Schnittlinien A-A und B-B gekennzeichnet sind.

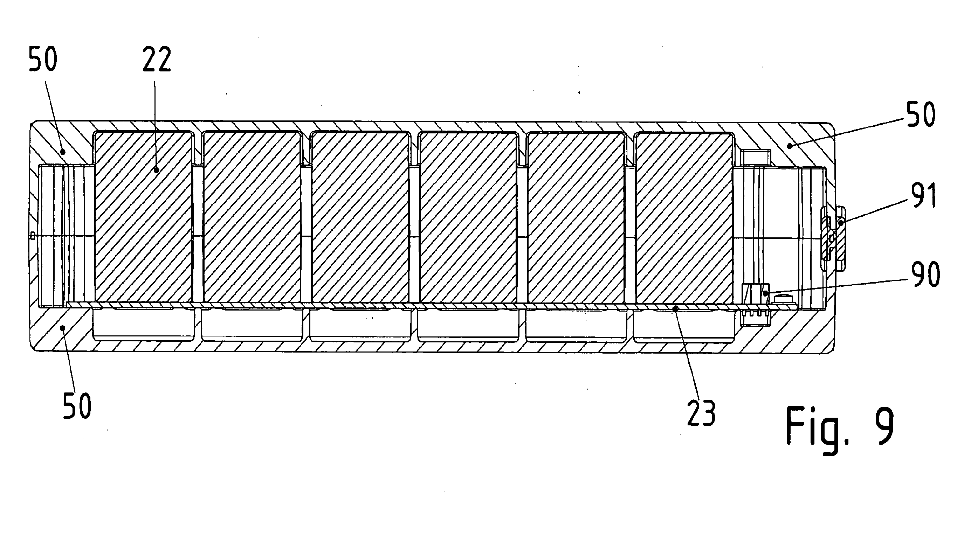

In der Figur 9 ist hierzu der Schnitt A-A gezeigt.

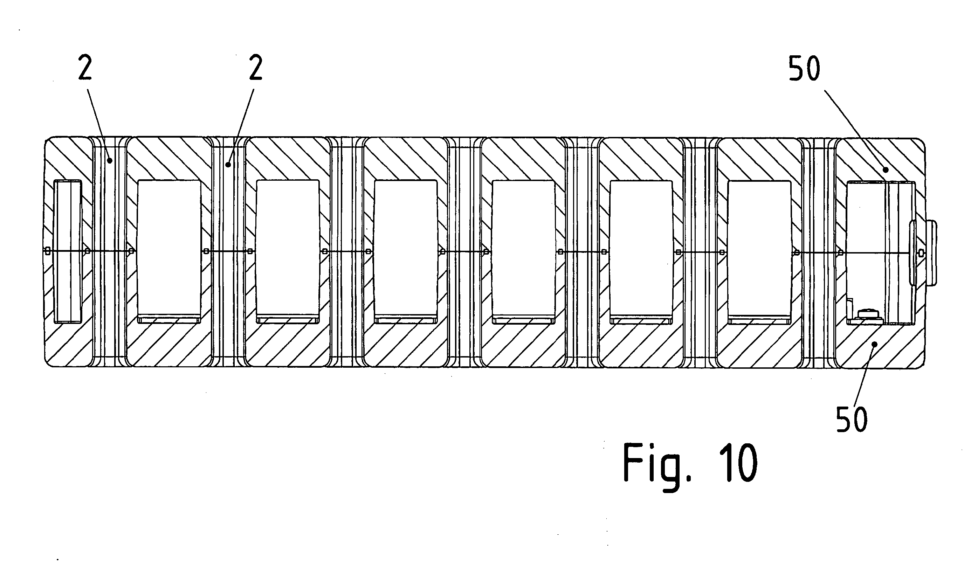

In der Figur 10 ist hierzu der Schnitt B-B gezeigt.

Dabei weist das einstückig ausgebildete Aufnahmeteil 1 Röhren 2 auf, mittels derer durchgängige Kanäle im Aufnahmeteil 1 gebildet sind, so dass die Kanäle von einem Kühlmedium, wie Luft oder Flüssigkeit, beispielsweise Wasser oder ÖI, die Kanäle durchströmbar ist.

Im Aufnahmeteil 1 sind Aufnahmebereiche 3 für in einer Ebene voneinander beabstandet angeordnete Wärme erzeugende Bauelemente angeordnet. Vorzugsweise sind die Bauelemente Kondensatoren, so dass die gesamte Anordnung eine Kondensatorbaugruppe, also ein Energiespeichermodul, umfassend Kondensatoren, ist.

Beim Beladen und Entladen der Kondensatoren fließen hohe elektrische Ströme, so dass eine Erwärmung der Kondensatoren unvermeidlich ist. Da die Anordnung der Bauelemente gitterartig ausgeführt ist, wird die Wärme aus den Zwischenraumbereichen zwischen den Bauelementen mittels der Röhren 2 abgeführt, die durch diese Zwischenraumbereiche in axialer Richtung hindurchgehen, also in Normalenrichtung zur Leiterplattenebene.

Vorzugsweise ist das Aufnahmeteil 1 samt Röhren 2 einstückig ausgebildet, insbesondere als Kunststoffspritzgussteil. Dabei ist sogar ein Kunststoff verwendbar, der ein schlechter Wärmeleiter ist, insbesondere schlecht im Vergleich zur Wärmeleitfähigkeit von Metallen, wie Stahl, Kupfer oder Aluminium. Denn die Beabstandung zwischen den Gehäusen der Bauelemente 22, welche direkt das Aufnahmeteil 1 berühren und den Röhren 2 ist gering gehalten. Der Wärmeübergangswiderstand zwischen Gehäusen der Bauelemente 22 und dem Aufnahmeteil 1 ist gering gehalten, indem direkte Berührung durch beispielhaft Presseinpassen der Gehäuse ins Aufnahmeteil 1 ausgeführt wird oder alternativ eine Wärmeleitpaste zwischen Gehäuse und Aufnahmeteil 1 vorgesehen wird.

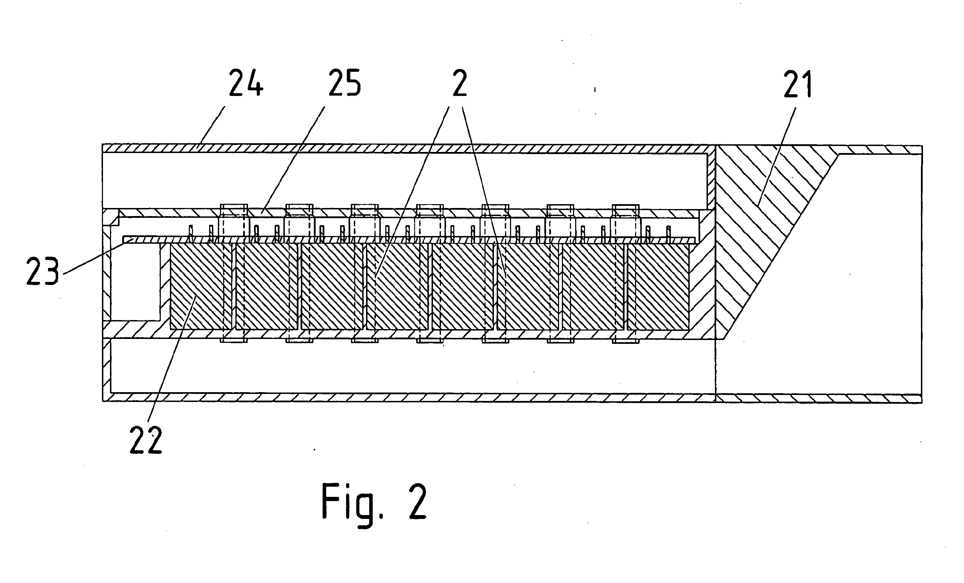

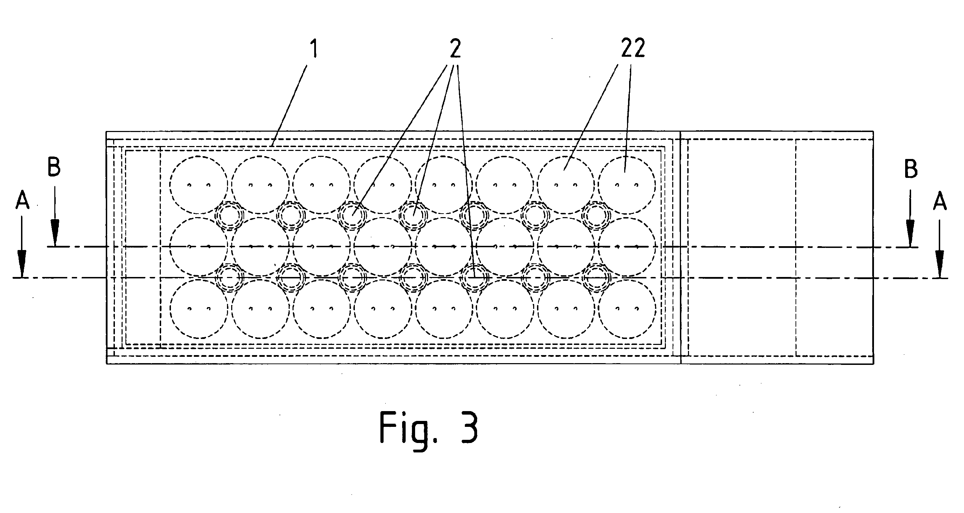

Das Aufnahmeteil 1 weist einen Lufteinlassbereich 4, durch den Luft mittels eines Lüfters bewegbar ist. In der Ausführung nach Figur 2 und 3 jedoch bildet das Aufnahmeteil 1 nach Einfügen einer Leiterplatte 23, auf der die Bauelemente 22 bestückt sind, also nach Einfügen der Bauelemente 22 in die jeweils zugeordneten Aufnahmebereiche 3, zusammen mit einer Verschlussplatte 25 einen geschlossenen Raumbereich. Dieser Raumberiech umfasst dabei die Leiterplatte 23 samt den darauf bestückten Bauelementen 22 und ist in hoher Schutzart abgedichtet gegen die Umgebung, insbesondere also luftdicht und wasserdicht verschlossen ausgebildet.

Das Aufnahmeteil 1 samt Verschlussplatte 25 ist wiederum in einem Gerät eingebaut, bei dem die von einem Lüfter 20 angetriebene Luft durch ein Luftleitmittel 21 auf einen Lufteinlassbereich gerichtet wird und somit am Aufnahmeteil entlang und durch die Röhren 2 des Aufnahmeteils hindurch strömt, um an der anderen Seite des Geräts in die Umgebung abgeführt zu werden. Das Gerät ist mit einem Deckelteil 24 verschlossen, wobei Luftauslass vorgesehen ist.

Die durch die Röhren 2 strömende Luft nimmt dabei Wärme auf, die vom jeweiligen Bauelement 22 stammt und durch die dünne Wandstärke des Aufnahmeteils 1 hindurchströmt.

Die Leiterplatte 23 weist Ausnehmungen auf, durch die die Röhren des Aufnahmeteils 1 hindurchführbar sind. Dabei ist die Form der Ausnehmungen auf die Form der Röhren 2 derart abgestimmt, dass eine Zentrierung der Leiterplatte samt Bauelementen relativ zum Aufnahmeteil 1 ermöglicht ist. Somit ist bei Herstellung die Leiterplatte zentrierbar an den Röhren des Aufnahmeteils 1 und dann mit diesem lösbar verbindbar, insbesondere verschraubbar.

Die Bauelemente sind also als gekapselte Kondensatoren ausgeführt und mechanisch an den Ausnehmungen des Aufnahmeteils mechanisch stabilisiert. Die Ausnehmungen des Aufnahmeteils sind vorzugsweise als zylindrische Raumberieche realisiert.

Der Ausgleich von Fertigungstoleranzen ist durch die Oberflächenstruktur ermöglicht.

Das Aufnahmeteil 1 ist als Bestückungshilfe verwendbar. Hierzu werden die Bauelemente zuerst in die Ausnehmungen des Aufnahmeteils eingeschoben und danach die Leiterplatte auf die Anschlussfüsschen der Bauelemente aufgeschoben. Danach wird die bestückte Leiterplatte durch ein Lötbad gefahren. Während des Lötens übernimmt das Aufnahmeteil Haltefunktion für die Bauelemente. Nach dem Lötverbinden sind die Bauelemente hauptsächlich an der Leiterplatte gehalten.

Mittels des erfindungsgemäßen Aufnahmeteils ist ein erhöhter Schutz gegen Umwelteinflüsse für die Bauelemente erreicht.

Statt des genannten Antreibens der Luft mittels des Lüfters 20 ist auch ein passives Betreiben ausführbar. Hierbei strömt die Luft konvektiv angetrieben durch die Röhren 2, insbesondere nach oben.

Mittels der in den Zwischenraumbereichen zwischen den Bauelementen angeordneten Röhren 2 ist eine möglichst homogene Wärmeverteilung im Aufnahmeteil erreichbar. Insbesondere ist in jedem der Zwischenraumbereiche eine Röhre vorsehbar. Zur weiteren Verbesserung der Homogenität der Wärmeverteilung ist auch ein entsprechender Durchmesserverlauf der Röhre 2 in Röhrenachsrichtung, also Normalenrichtung zur Leiterplatte vorteilhaft.

Bei elektrischer Reihenschaltung der als Kondensatoren ausgeführten Bauelemente bringt die Homogenität der Wärmeverteilung, also die möglichst gleichen Temperaturen der einzelnen Kondensatoren, den Vorteil, dass die Standzeit erhöht ist. Denn schon bei anfangs geringfügig schlechter entwärmtem Kondensator wird dessen Innenwiderstand erhöht und somit eine größere Verlustwärme erzeugt, die wiederum schlechter als bei anderen Kondensatoren abgeführt wird. Dadurch ist der Kondensator einer vergleichsweise höheren Temperatur ausgesetzt und altert somit schneller, was seinen Innenwiderstand weiter erhöht.

Mittels der Ausnehmungen, insbesondere im Aufnahmeteil und in der Leiterplatte, und mittels der Röhren ist eine Massen- und/oder Gewichtsreduktion erreichbar.

Mittels der geeigneten elektrischen Durchschlagfestigkeit des Materials des Aufnahmeteils ist eine verbesserte elektrische Isolierung zwischen den Bauelementen untereinander und zur Leiterplatte hin sowie zwischen Bauelemente und Umgebung erreichbar.

Bei Ausführung der Bauelemente als Kondensatoren, insbesondere Doppelschichtkondensatoren, ist eine Reihenschaltung derselben auf der Leiterplatte ausführbar, um eine höhere Gesamtspannung zu erreichen.

Als Schutz gegen aus den Kondensatoren austretende Chemikalien, beispielsweise bei Ausgasung, ist der geschlossene Raumbereich, in welchem die Kondensatoren aufgenommen sind, luftdicht abgeschlossen zwischen Aufnahmeteil 1 und Verschlussplatte 25. Somit ist auch bei Ausgasungen, die leicht entzündlich sind, ein hoher Schutz erreichbar.

Die Kondensatoren sind in den Ausnehmungen 3 des Aufnahmeteils 1 thermisch und mechanisch gut aufgenommen, insbesondere also gut wärmeleitend verbunden, so dass der gesamte Wärmeübergangswiderstand vom Kondensator zum Aufnahmeteil kleiner ist als der Wärmeübergangswiderstand vom Kondensator an die ihn direkt umgebende Luft und/oder an die Umgebungsluft. Die Ausnehmungen 3 sind wannenförmig ausgebildet.

Die Oberfläche der Ausnehmungen 3 ist mit Erhebungen und/oder Vertiefungen ausgeführt, so dass beim Verbinden der Bauelemente mit dem Aufnahmeteil 1 mittels elastischer Verformung des Aufnahmeteils 1 ein gut wärmeleitender Übergang und eine ausreichende mechanische Stabilisierung erreichbar ist. Beispielhaft ist die Oberfläche mit einer Noppen und/oder Rillen umfassenden Struktur ausbildbar. Somit ist bei Verbinden des Kondensators mit dem Aufnahmeteil 1 durch elastische Verformung dieser Strukturen eine dichte, gut wärmeleitende und mechanische stabile Verbindung, insbesondere lösbare Verbindung, erreichbar.

Zusätzlich oder alternativ ist ein Einfüllen von Öl, Wärmeleitpaste oder Vergussmasse zwischen die Ausnehmungen 3 und die Bauelemente ausführbar.

Da die Verbindung zwischen Bauelementen und Aufnahmeteil 1 lösbar ist, ist eine einfache Wartung ermöglicht.

Das Aufnahmeteil 1 ist samt der Röhren 2 einstückig, insbesondere als Kunststoffspritzgussteil, hergestellt.

In einem weiteren erfindungsgemäßen Ausführungsbeispiel werden also die Röhren 2 des Aufnahmeteils 1 an den Ausnehmungen der Leiterplatte ausgerichtet und zentriert. Alternativ wird die Leiterplatte 2 an den Röhren 2 des Aufnahmeteils 1 ausgerichtet und zentriert.

In einem weiteren erfindungsgemäßen Ausführungsbeispiel ist auf der Leiterplatte ein Sensor zur Erfassung der Temperatur angeordnet, wobei der erfasste Messwert einer Regeleinheit zugeführt wird, die die Förderleistung des Lüfters 20 derart steuert, dass der erfasste Temperaturwert auf einen Sollwert hin geregelt wird. Als Regeleinheit ist ein linearer Regler verwendbar. Die Regeleinheit ist auf der Leiterplatte vorsehbar, so dass kein zusätzlicher Bauraum benötigt wird.

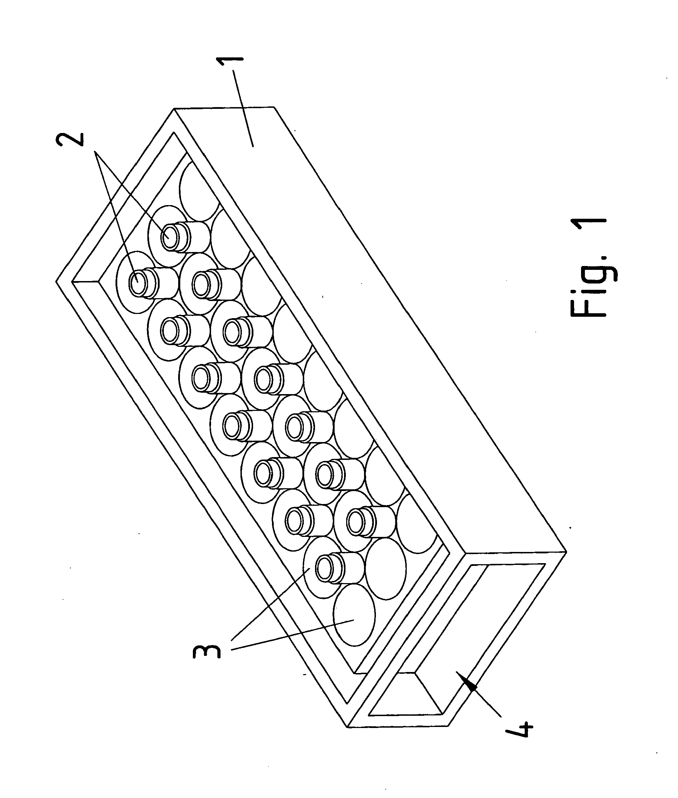

In einem weiteren erfindungsgemäßen Ausführungsbeispiel wird eine prädiktive Lüfterregelung ausgeführt, wobei der Lüfter 20 nach Figur 1 mit einer von der vorausbestimmten, also angenommenen, Wärmeleistung der Bauelemente abhängigen Förderleistung betrieben wird.

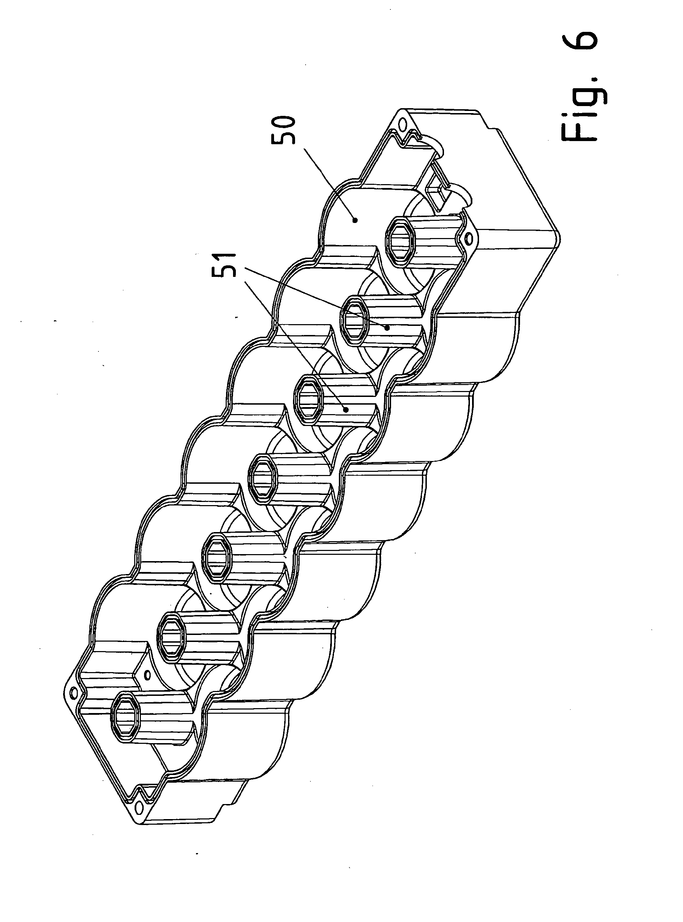

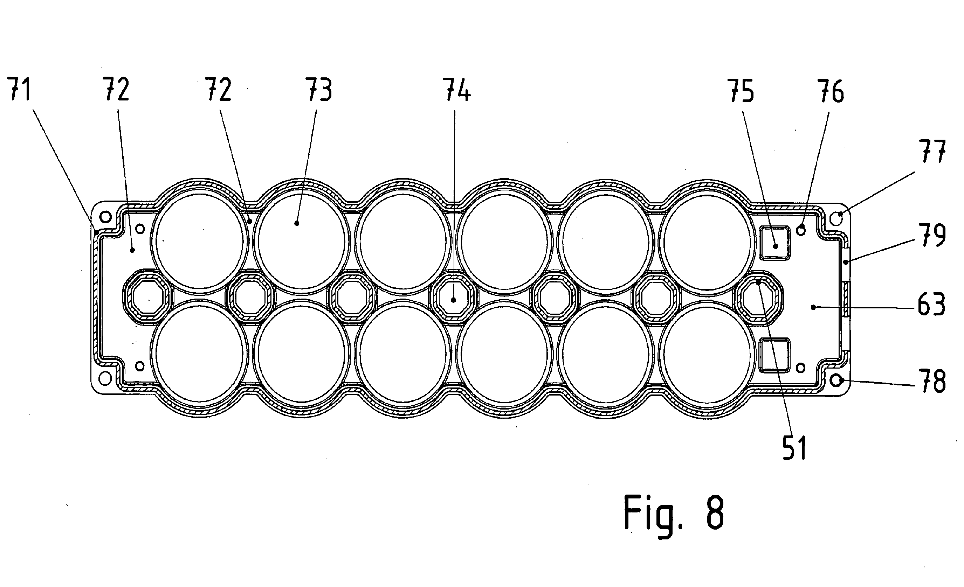

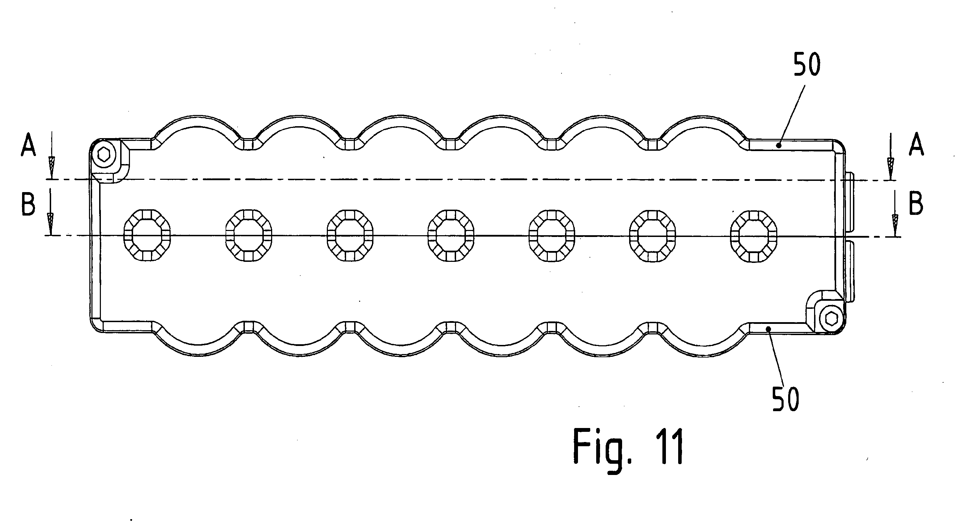

Wie in den Figuren 9 bis 11 gezeigt, ist ein weiteres erfindungsgemäßes Ausführungsbeispiel mit einem Aufnahmeteilstück 50 ausführbar, das in Figur 6 dargestellt ist. Dabei folgt die seitliche Oberfläche der Wandung des Aufnahmeteilstücks 50 den einführbaren Kondensatoren 73, wie in Figur 8 gezeigt.

Das Aufnahmeteil 50 weist in seinem Innenraum Dome 51 für durchgängig ausgebildete Kanäle auf, die einstückig am Aufnahmeteilstück 50 ausgeformt sind. Vorzugswiese wird dieses Aufnahmeteilstück 50 samt Dome 51 als Kunststoffspritzgussteil gefertigt, wobei der Kunststoff elektrisch isolationsfest und elektrisch isolierend ist, insbesondere gegen die auftretenden Spannungen ist.

Die Dome 51 sind in einer linearen Reihe angeordnet, insbesondere regelmäßig voneinander beabstandet.

Wie in Figur 8 gezeigt, ist in das Aufnahmeteil 50 eine Leiterplatte 63 einlegbar und am Aufnahmeteil 50 eine Dichtungsnut 71 vorgesehen, so dass das Aufnahmeteil mit einem gleichartigen Aufnahmeteilstück 50 dicht verbindbar ist und dabei ein abgedichteter Innenraum zur Aufnahme der Leiterplatte 63 mit den auf ihr bestückten Kondensatoren 22 gebildet ist.

Das Aufnahmeteilstück 50 weist Ausnehmungen 64 als Durchlass für Dome 51 auf. Außerdem ist eine umlaufende Dichtungsnut 71 am Aufnahmeteil 50 angeordnet, welche um die Auflagefläche 72 für Leiterplatte 63 umläuft.

Des Weiteren sind am Aufnahmeteil 50 Ausnehmungen 73 zur Aufnahme von Kondensatoren 22 vorgesehen. Im Bereich der Dome 51, insbesondere mittig zu diesen, sind auch durchgehende Ausnehmungen 74 für Fluidströmung angeordnet.

Des Weiteren sind Ausnehmungen 75 für Anschlussgewinde 90 und Gewinde 76 für Leiterplattenbefestigung am Aufnahmeteil 50 ausgeführt. Des Weiteren ist eine Stirnsenkung 77 für Gehäuseverschraubung und Gewinde 78 für Gehäuseverschraubung vorgesehen am Aufnahmeteilstück 50 sowie Ausnehmungen 79 für Kabeldurchführung.

In Figur 9 ist das Anschlussgewinde 90 gezeigt sowie die Kabeldurchführung 91 zur Durchführung der Anschlusskabel zur bestückten Leiterplatte 63.

Somit ist das Aufnahmeteil aus zwei Aufnahmeteilstücken zusammensetzbar, das auf diese Weise ein dichtes Kapselgehäuse für die Kondensatoren bildet.

Somit sind die Kondensatoren mittels der zwei dicht verbundenen und miteinander schraubverbundenen Aufnahmeteilstücke 50 geschützt vor dem mit Kühlmedium gefüllten Raumbereich. Insbesondere ist eine luftdichte, öldichte und/oder wasserdichte Kapselung der Kondensatoren erreicht bei gleichzeitig guter Entwärmung. Denn zwischen den Kondensatoren führen die Dome 51 in ihren röhrenartigen Kanälen Kühlmedium.

In einem weiteren erfindungsgemäßen Ausführungsbeispiel wird statt des Kühlmediums Luft ein anderes Kühlmedium, wie Flüssigkeit, wie ÖI oder Wasser verwendet. Die elektrische Isolierung ist gewährleistet durch den verwendeten Kunststoff und die Dichtheit ist mittels entsprechender Dichtungen, wie beispielhaft auch in Figur 8 gezeigt, herstellbar.

In einem weiteren erfindungsgemäßen Ausführungsbeispiel wird statt der Leiterplatte eine andere elektrische Verbindungsvorrichtung, wie Stromschiene verwendet. Dabei sind die Stromschienen zur elektrischen Verbindung mit den Kondensatoren verschweißt oder verschraubt.

### Bezugszeichenliste

- 1: Aufnahmeteil
- 2: Röhren, insbesondere durchgängig ausgebildete Kanäle im Aufnahmeteil 1
- 3: Aufnahmebereich
- 4: Lufteinlassbereich
- 20: Lüfter
- 21: Luftleitmittel
- 22: Wärme erzeugendes Bauelement, insbesondere Kondensator
- 23: Leiterplatte mit Ausnehmungen
- 24: Deckelteil
- 25: Verschlussplatte
- 50: Aufnahmeteilstück
- 51: Dom für durchgängig ausgebildete Kanäle
- 63: Leiterplatte
- 64: Ausnehmungen als Durchlass für Dom 51
- 71: Dichtungsnut
- 72: Auflagefläche für Leiterplatte 63
- 73: Ausnehmung zur Aufnahme eines Kondensators
- 74: durchgehende Ausnehmung für Fluidströmung
- 75: Ausnehmung für Anschlussgewinde
- 76: Gewinde für Leiterplattenbefestigung
- 77: Stirnsenkung für Gehäuseverschraubung
- 78: Gewinde für Gehäuseverschraubung
- 79: Ausnehmung für Kabeldurchführung
- 90: Anschlussgewinde
- 91: Kabeldurchführung

## Patentansprüche

1. Anordnung **zum Kühlen von Wärme erzeugenden elektrischen Bauelementen (22), insbesondere Kondensatoren,**
**dadurch gekennzeichnet, dass**
**bei der Anordnung** die zu kühlenden Bauelemente (22) auf einer Verbindungsvorrichtung, insbesondere Leiterplatte oder Stromschiene, (23) bestückt sind,
**wobei** die Bauelemente (22) in Ausnehmungen (3) eines Aufnahmeteils (1), das Kühlmedium-Kanäle, insbesondere Luftkanäle (2), aufweist, angeordnet sind derart, dass jeweils eines der Bauelemente (22) von jeweils einer der Ausnehmungen (3) des Aufnahmeteils (1) aufgenommen sind,
**wobei** die Verbindungsvorrichtung, insbesondere Leiterplatte oder Stromschiene, (23) Ausnehmungen aufweist,
**wobei** die Kanäle (2) von der der Verbindungsvorrichtung, insbesondere Leiterplatte oder Stromschiene, (23) abgewandten Seite des Aufnahmeteils (1) durch die Ausnehmungen der Verbindungsvorrichtung, insbesondere Leiterplatte oder Stromschiene, (23) zu der vom Aufnahmeteil (1) abgewandten Seite der Verbindungsvorrichtung, insbesondere Leiterplatte oder Stromschiene, (23) führen.

2. Anordnung nach Anspruch 1,
**dadurch gekennzeichnet, dass**
das Aufnahmeteil aus zumindest zwei Aufnahmeteilstücken (50) zusammengesetzt ist, insbesondere wobei die Aufnahmeteilstücke dicht verbunden sind, insbesondere luftdicht und/oder wasserdicht.

3. Anordnung nach einem der vorangegangenen Ansprüche,
**dadurch gekennzeichnet, dass**
das Aufnahmeteil die Verbindungsvorrichtung, insbesondere Leiterplatte oder Stromschiene, samt der auf ihr bestückten Kondensatoren gehäusebildend und abgedichtet gegen die das Kühlmedium führenden Kanäle umschließt.

4. Anordnung nach einem der vorangegangenen Ansprüche,
**dadurch gekennzeichnet, dass**
die Verbindungsvorrichtung, insbesondere Leiterplatte oder Stromschiene, Ausnehmungen aufweist zur Durchleitung der Kanäle für das Kühlmedium.

5. Anordnung nach einem der vorangegangenen Ansprüche,
**dadurch gekennzeichnet, dass**
die Kanäle für das Kühlmedium jeweils in röhrenartigen Ausnehmungen des Aufnahmeteils angeordnet sind.

6. Anordnung nach einem der vorangegangenen Ansprüche,
**dadurch gekennzeichnet, dass**
die Oberfläche im Bereich der im Aufnahmeteil angeordneten Ausnehmungen rau ausgeführt ist.

7. Anordnung nach einem der vorangegangenen Ansprüche,
**dadurch gekennzeichnet, dass**
die Oberfläche im Bereich der im Aufnahmeteil angeordneten Ausnehmungen Noppen und/oder Rillen aufweist.

8. Anordnung nach einem der vorangegangenen Ansprüche,
**dadurch gekennzeichnet, dass**
das Aufnahmeteil mit einer Verschlussplatte derart dicht verbindbar ist, dass die Verbindungsvorrichtung, insbesondere Leiterplatte oder Stromschiene, zusammen mit den Bauelementen von der Umgebung in hoher Schutzart, insbesondere wasserdicht und/oder luftdicht abgeschlossen ist.

9. Anordnung nach einem der vorangegangenen Ansprüche,
**dadurch gekennzeichnet, dass**
die Kanäle für das Kühlmedium jeweils in den zwischen den Ausnehmungen des Aufnahmeteils gebildeten Raumbereichen des Aufnahmeteils angeordnet sind.

10. Anordnung nach einem der vorangegangenen Ansprüche,
**dadurch gekennzeichnet, dass**
die Ausnehmungen im Aufnahmeteil sich in Normalenrichtung zur Leiterplattenebene erstrecken und/oder zumindest teilweise zylindrisch geformt sind.

11. Anordnung nach einem der vorangegangenen Ansprüche,
**dadurch gekennzeichnet, dass**
die Kanäle für das Kühlmedium jeweils in Normalenrichtung zur Leiterplattenebene angeordnet sind.

12. Anordnung nach einem der vorangegangenen Ansprüche,
**dadurch gekennzeichnet, dass**
die Ausnehmungen der Leiterplatte und/oder die Kanäle im Aufnahmeteil in einer endlichen zweidimensionalen Gitteranordnung angeordnet sind, insbesondere in einer zur Leiterplattenebene parallelen Ebene.

13. Anordnung nach einem der vorangegangenen Ansprüche,
**dadurch gekennzeichnet, dass**
das Aufnahmeteil samt Verschlussplatte in einem Gehäuse angeordnet sind, so dass die Kanäle mit einem passiv oder aktiv angetriebenen Kühlmediumstrom durchströmbar sind,
insbesondere bei Verwendung von Luft als Kühlmedium konvektiv oder durch einen Lüfter angetriebenen Kühlluftstrom durchströmbar sind.

14. Anordnung nach einem der vorangegangenen Ansprüche,
**dadurch gekennzeichnet, dass**
die Bauelemente mittels Presspassung mit dem Aufnahmeteil verbunden sind
und/oder dass
zwischen der Wandung des Aufnahmeteils und dem jeweiligen Bauelement ein ÖI, Wärmeleitpaste, Vergussmasse oder eine Flüssigkeit angeordnet ist.

15. Anordnung nach einem der vorangegangenen Ansprüche,
**dadurch gekennzeichnet, dass**
das Aufnahmeteil aus Kunststoff ist und/oder das Aufnahmeteil aus derart elastischem Material, dass das Aufnahmeteil zumindest teilweise elastisch verformt ist beim Einfügen des jeweiligen Bauelements in die jeweils zugeordnete Ausnehmung des Aufnahmeteils,
insbesondere wobei der Kunststoff aus elektrisch isolierendem und/oder elektrisch isolationsfestem Material ausgeführt ist.

16. Kondensatorbaugruppe in einer Anordnung nach einem der vorangegangenen Ansprüche,
**dadurch gekennzeichnet, dass**
die Bauelemente ein zylindrisches Gehäuse aufweisen und mit ihren Anschlussfüsschen auf der Leiterplatte lötverbunden sind
oder mit der elektrischen Verbindungsvorrichtung schraubverbunden oder schweißverbunden sind.

17. Herstellverfahren für eine Anordnung nach einem der Ansprüche 1 bis 15,
**dadurch gekennzeichnet, dass**
- in einem ersten Schritt die Bauelemente in die Ausnehmungen des Aufnahmeteils eingefügt werden,
- in einem zweiten Schritt das Aufnahmeteil als Fertigungshilfe verwendet wird, indem die Leiterplatte mit Anschlussfüsschen der Bauelemente verbunden, insbesondere lötverbunden, wird.

## Claims

1. Arrangement for cooling heat-generating electrical components (22), in particular capacitors,
**characterised in that**
in the arrangement, the components (22) to be cooled are mounted on a connecting device, in particular printed circuit board or conductor rail, (23),
wherein the components (22) are arranged in recesses (3) of an accommodating part (1), which has cooling-medium channels, in particular air channels (2), in such a manner that in each case one of the components (22) is accommodated by in each case one of the recesses (3) of the accommodating part (1),
wherein the connecting device, in particular printed circuit board or conductor rail, (23) has recesses,
wherein the channels (2) lead from the side of the accommodating part (1) facing away from the connecting device, in particular printed circuit board or conductor rail, (23) through the recesses of the connecting device, in particular printed circuit board or conductor rail, (23) to the side of the connecting device, in particular printed circuit board or conductor rail, (23) facing away from the accommodating part (1).

2. Arrangement according to Claim 1,
**characterised in that**
the accommodating part is composed of at least two accommodating-part pieces (50),
in particular wherein the accommodating-part pieces are connected tightly, in particular airtightly and/or watertightly.

3. Arrangement according to one of the preceding claims,
**characterised in that**
the accommodating part encloses the connecting device, in particular printed circuit board or conductor rail, together with the capacitors mounted on the connecting device, in such a manner as to form a housing and be sealed off from the channels conducting the cooling medium.

4. Arrangement according to one of the preceding claims,
**characterised in that**
the connecting device, in particular printed circuit board or conductor rail, has recesses for routing the channels for the cooling medium therethrough.

5. Arrangement according to one of the preceding claims,
**characterised in that**
the channels for the cooling medium are arranged in each case in tubular recesses of the accommodating part.

6. Arrangement according to one of the preceding claims,
**characterised in that**
the surface in the region of the recesses arranged in the accommodating part is of rough form.

7. Arrangement according to one of the preceding claims,
**characterised in that**
the surface in the region of the recesses arranged in the accommodating part has pimples and/or grooves.

8. Arrangement according to one of the preceding claims,
**characterised in that**
the accommodating part is connectable to a closing plate in such a tight manner that the connecting device, in particular printed circuit board or conductor rail, together with the components is sealed off from the environment with a high degree of protection, in particular watertightly and/or airtightly.

9. Arrangement according to one of the preceding claims,
**characterised in that**
the channels for the cooling medium are arranged in each case in the spatial regions of the accommodating part which are formed between the recesses of the accommodating part.

10. Arrangement according to one of the preceding claims,
**characterised in that**
the recesses in the accommodating part extend in the direction of the normal to the printed circuit board plane and/or are at least partly cylindrically shaped.

11. Arrangement according to one of the preceding claims,
**characterised in that**
the channels for the cooling medium are arranged in each case in the direction of the normal to the printed circuit board plane.

12. Arrangement according to one of the preceding claims,
**characterised in that**
the recesses of the printed circuit board and/or the channels in the accommodating part are arranged in a finite two-dimensional grid arrangement, in particular in a plane parallel to the printed circuit board plane.

13. Arrangement according to one of the preceding claims,
**characterised in that**
the accommodating part together with closing plate are arranged in a housing, so that a passively or actively driven cooling medium flow is able to flow through the channels,
in particular when using air as cooling medium, a cooling medium air is able to flow through the channels convectively or driven by a fan.

14. Arrangement according to one of the preceding claims,
**characterised in that**
the components are connected to the accommodating part by means of an interference fit
and/or **in that**
an oil, heat-conducting paste, sealing compound or a liquid is arranged between the wall of the accommodating part and the respective component.

15. Arrangement according to one of the preceding claims,
**characterised in that**
the accommodating part is made of plastic and/or the accommodating part is made of material of such elasticity that the accommodating part is at least partly elastically deformed on insertion of the respective component into the respectively assigned recess of the accommodating part,
in particular wherein the plastic is formed from electrically insulating and/or electrical-insulation-resistant material.

16. Capacitor assembly in an arrangement according to one of the preceding claims,
**characterised in that**
the components have a cylindrical housing and are connected by their connection feet to the printed circuit board by soldering
or are connected to the electrical connecting device by screwing or by welding.

17. Method for producing an arrangement according to one of Claims 1 to 15,
**characterised in that**
- in a first step the components are inserted into the recesses of the accommodating part,
- in a second step the accommodating part is used as a production aid, whereby the printed circuit board is connected, in particular connected by soldering, by connection feet of the components.

## Revendications

1. Agencement pour refroidir des composants électriques (22) produisant de la chaleur, en particulier des condensateurs,
**caractérisé en ce que**
dans l'agencement, les composants (22) à refroidir équipent un dispositif de connexion, en particulier une carte de circuits imprimés ou une barre conductrice, (23),
les composants (22) étant disposés dans des évidements (3) d'une pièce de réception (1) qui présente des canaux de fluide de refroidissement, en particulier des canaux d'air (2), de façon que chaque fois un des composants (22) soit logé dans chaque fois un des évidements (3) de la pièce de réception (1),
le dispositif de connexion, en particulier la carte de circuits imprimés ou la barre conductrice, (23) présentant des évidements,
les canaux (2) conduisant du côté de la pièce de réception (1) éloigné du dispositif de connexion, en particulier de la carte de circuits imprimés ou de la barre conductrice, (23) à travers les évidements du dispositif de connexion, en particulier de la carte de circuits imprimés ou de la barre conductrice, (23) au côté du dispositif de connexion, en particulier de la carte de circuits imprimés ou de la barre conductrice, (23) éloigné de la pièce de réception (1).

2. Agencement selon la revendication 1,
**caractérisé en ce que**
la pièce de réception est composée d'au moins deux parties de pièce de réception (50),
les parties de pièce de réception étant en particulier reliées de manière étanche, en particulier étanche à l'air et/ou étanche à l'eau.

3. Agencement selon l'une des revendications précédentes,
**caractérisé en ce que**
la pièce de réception entoure le dispositif de connexion, en particulier la carte de circuits imprimés ou la barre conductrice, ainsi que les condensateurs dont il est équipé, sous la forme d'un boîtier et de manière étanche par rapport aux canaux conduisant le fluide de refroidissement.

4. Agencement selon l'une des revendications précédentes,
**caractérisé en ce que**
le dispositif de connexion, en particulier la carte de circuits imprimés ou la barre conductrice, présente des évidements pour le passage des canaux pour le fluide de refroidissement.

5. Agencement selon l'une des revendications précédentes,
**caractérisé en ce que**
les canaux pour le fluide de refroidissement sont chaque fois disposés dans des évidements tubulaires de la pièce de réception.

6. Agencement selon l'une des revendications précédentes,
**caractérisé en ce que**
la surface dans la zone des évidements disposés dans la pièce de réception est rugueuse.

7. Agencement selon l'une des revendications précédentes,
**caractérisé en ce que**
la surface dans la zone des évidements disposés dans la pièce de réception présente des picots et/ou des rainures.

8. Agencement selon l'une des revendications précédentes,
**caractérisé en ce que**
la pièce de réception peut être reliée à une plaque de fermeture de manière étanche, de façon que le dispositif de connexion, en particulier la carte de circuits imprimés ou la barre conductrice, soit, ainsi que les composants, isolé par rapport à l'environnement avec un haut degré de protection, en particulier de manière étanche à l'eau et/ou étanche à l'air.

9. Agencement selon l'une des revendications précédentes,
**caractérisé en ce que**
les canaux pour le fluide de refroidissement sont chaque fois disposés dans les espaces de la pièce de réception formés entre les évidements de la pièce de réception.

10. Agencement selon l'une des revendications précédentes,
**caractérisé en ce que**
les évidements dans la pièce de réception s'étendent dans une direction normale par rapport au plan de la carte de circuits imprimés et/ou présentent une forme au moins partiellement cylindrique.

11. Agencement selon l'une des revendications précédentes,
**caractérisé en ce que**
les canaux pour le fluide de refroidissement sont chaque fois disposés dans une direction normale par rapport au plan de la carte de circuits imprimés.

12. Agencement selon l'une des revendications précédentes,
**caractérisé en ce que**
les évidements de la carte de circuits imprimés et/ou les canaux dans la pièce de réception sont disposés en un réseau bidimensionnel fini, en particulier dans un plan parallèle au plan de la carte de circuits imprimés.

13. Agencement selon l'une des revendications précédentes,
**caractérisé en ce que**
la pièce de réception ainsi que la plaque de fermeture sont disposées dans un boîtier de façon que les canaux puissent être traversés par un courant de fluide de refroidissement entraîné passivement ou activement,
en particulier, en cas d'utilisation de l'air comme fluide de refroidissement, traversés par un courant d'air de refroidissement entraîné par convection ou par un ventilateur.

14. Agencement selon l'une des revendications précédentes,
**caractérisé en ce que**
les composants sont reliés à la pièce de réception par ajustement serré
et/ou que
une huile, une pâte thermoconductrice, une masse de remplissage ou un liquide est disposé(e) entre la paroi de la pièce de réception et le composant respectif.

15. Agencement selon l'une des revendications précédentes,
**caractérisé en ce que**
la pièce de réception est en matière plastique et/ou la pièce de réception est composée d'une matière suffisamment élastique pour que la pièce de réception soit déformée au moins en partie élastiquement lors de l'insertion du composant respectif dans l'évidement respectivement associé de la pièce de réception,
la matière plastique étant en particulier réalisée dans une matière électriquement isolante et/ou présentant une résistance d'isolement électrique.

16. Ensemble de condensateurs dans un agencement selon l'une des revendications précédentes,
**caractérisé en ce que**
les composants présentent un boîtier cylindrique et sont brasés sur la carte de circuits imprimés par leurs pattes de connexion
ou sont assemblés par vissage ou par soudage avec le dispositif de connexion électrique.

17. Procédé de fabrication pour un agencement selon l'une des revendications 1 à 15, **caractérisé en ce que**
- dans une première étape, les composants sont insérés dans les évidements de la pièce de réception,
- dans une deuxième étape, la pièce de réception est utilisée comme auxiliaire de fabrication, la carte de circuits imprimés étant assemblée, en particulier assemblée par brasage, avec les pattes de connexion des composants.
